# EUROPEAN PATENT SPECIFICATION

(11) **EP 1 966 703 B1**
(45) Date of publication and mention of the grant of the patent: **04.03.2015**
(21) Application number: 06845735.7
(22) Date of filing: 18.12.2006
(51) Int. Cl.: G06F 12/08, G06F 12/02

(54) **METHOD AND APPARATUS FOR HARDWARE-BASED DYNAMIC ESCAPE DETECTION IN MANAGED RUN-TIME ENVIRONMENTS**
VERFAHREN UND VORRICHTUNG ZUR HARDWARE-BASIERTEN DYNAMISCHEN AUSTRITTSERKENNUNG IN UMGEBUNGEN MIT VERWALTETER LAUFZEIT
MÉTHODE ET APPAREIL DE DÉTECTION MATÉRIELLE D'ÉCHAPPEMENT DYNAMIQUE DANS DES ENVIRONNEMENTS D'EXÉCUTION GÉRÉS

(30) Priority: 30.12.2005 US 322484
(43) Date of publication of application: 10.09.2008
(73) Proprietor: Intel Corporation, Santa Clara, CA 95054 (US)
(72) Inventor: JACOBSON, Quinn, A., Sunnyvale, CA 94087 (US); SRINIVAS, Suresh, Portland, OR 97229 (US); BRACY, Anne, C., Mt. View, CA 94040 (US); WANG, Hong, Santa Clara, CA 95052 (US)
(74) Representative: Beresford, Keith Denis Lewis
(86) International application number: PCT/US2006/048278
(87) International publication number: WO 2007/078920

(56) References cited:
- US-B1- 6 757 891
- US-B1- 6 912 553

## Description

### FIELD

One or more embodiments relate generally to the field of integrated circuit and computer system design. More particularly, one or more of the embodiments relate to a method and apparatus for hardware-based dynamic escape detection in managed run-time environments.

### BACKGROUND

Managed run-time environments are the infrastructures for running applications based on new programming languages, such as Java and C-Sharp (C#). Within the context of managed run-time environments, the allocation of objects is performed from a common memory area, referred to as the "heap," which is often a shared resource in such environments. Generally, the heap is periodically collected as part of the automatic memory management in such environments. This generally involves scanning dynamically allocated memory for unreachable objects and returning the memory occupied by such objects. As described herein, objects that are allocated can be classified as having either a local scope or a global scope.

As described herein, an object that is defined or classified as having local scope is an object that is visible to a single thread. In other words, a local object is only referenced by local pointers or linked to by other local objects of the same thread. Conversely, an object that is classified as having a global scope refers to an object that is visible by more than one thread.

In multi-threaded managed run-time environments (MRTEs), many optimizations can be applied when working on objects that are known to be local to a single thread. Synchronization of local objects may be avoided and local objects can be allocated in such a way to enable local reclaiming, thus minimizing the work load of a global garbage collector in MRTEs.

A large percentage of objects are indeed local, but it is a challenge to determine for a given object if it is local or global. Conventionally, there are two approaches to determine if an object is local. First, one can perform compiler static analysis of the program and determine that from when an object is created until it is destroyed, there is no possible way for the object to become reachable from another thread. Unfortunately, static analysis can only identify a small fraction of the objects that may be provably identified as local.

A second approach for identifying local objects is to dynamically keep track of what objects are local and which objects are global and detect when an object becomes global by detecting that a link to the object now makes the object globally reachable. As described herein, the scope or reachability of an object refers to the visibility of an object by either a single thread, wherein the object is deemed as having a local scope, or referred to as "locally reachable." Conversely, an object that is visible to more than one thread is identified as having a global scope or, in the alternative, referred to as "globally reachable."

Dynamic escape detection provides an approach for determining when a local object becomes global by detecting that a link to the object now makes it globally reachable. Conventional dynamic escape detection is performed by checking every time an object is updated. Based on such an update, if the new link changes the target object from a locally reachable object to a globally reachable object, the target object now includes a modified scope, such that the local object is now a global object having a global scope or identified, in the alternative, as "globally reachable." As described herein, a "write barrier refers to the performance of such checks to determine whether dynamic escape detection is detected for a local object based on a pointer update.

In most MRTEs, no effort is made to identify local objects and to optimize execution based on such knowledge. The reason is that static analysis identifies so few candidates to optimize. In addition, the overhead of dynamic escape detection mitigates the benefits of optimization and exploitation of local object knowledge.

Disclosed in US 6757891 is a computer-implemented method for reducing a computing overhead associated with objects that are local to a particular thread and can be accessed solely by that thread. Dynamically during runtime, an object is determined to be local to a particular thread and can be accessed solely by that thread, whereby a computing overhead associated with that objet may be reduced. Likewise, cash locality may be optimised in respect of objects that are determined to be global so as to avoid putting them in the same cache line, whilst thread-local objects are preferably stored in a cache line associated with that thread.

Aspects of the present invent i on arc set out in the appended independent claims.

### BRIEF DESCRIPTION OF THE DRAWINGS

The various embodiments of the present invention are illustrated by way of example, and not by way of limitation, in the figures of the accompanying drawings and in which:
FIG. 1 is a block diagram illustrating a managed run-time environment (MRTE) to provide hardware-based dynamic escape detection, in accordance with one embodiment.
FIG. 2 is a block diagram illustrating a cache memory to provide attribute aware technology (AAT), in accordance with one embodiment.
FIG. 3 is a block diagram illustrating AAT instructions, in accordance with one embodiment.
FIG. 4 is a block diagram illustrating a basic pointer update operation, in accordance with one embodiment.
FIG. 5 is a block diagram illustrating alternative platform configurations for the MRTE, as shown in FIG. 1, in accordance with one embodiment.
FIG. 6 is a block diagram illustrating a computer platform in which MRTE, as shown in FIG. 1, may be implemented to provide hardware-based dynamic escape detection, in accordance with one embodiment.
FIG. 7 is a block diagram illustrating a symmetric multiprocessor (SMP) computer system in which MRTE, as shown in FIG. 1, may be implemented, in accordance with one embodiment.
FIG. 8 is a flowchart illustrating a method for providing hardware-based dynamic escape detection, in accordance with one embodiment.
FIG. 9 is a flowchart illustrating a method for initialization to enable hardware-based dynamic escape detection, in accordance with one embodiment.
FIG. 10 is a flowchart illustrating a method for issuing a AAT instruction, in accordance with one embodiment.
FIG. 11 is a flowchart illustrating a method for invoking a handler routine to verify that a scope of a target object is local, in accordance with one embodiment.
FIG. 12 is a flowchart illustrating a method for converting a local object to a global object, in accordance with one embodiment.
FIG. 13 is a flowchart illustrating a method for converting a local object to a global object, in accordance with one embodiment.
FIG. 14 is a flowchart illustrating a method for enabling hardware-based dynamic escape detection according to one embodiment.
FIG. 15 is a flowchart illustrating a method for initializing cache memory to enable hardware-based dynamic escape detection, according to one embodiment.

### DETAILED DESCRIPTION

A method and apparatus for hardware-based dynamic escape detection in managed run-time environments are described. In one embodiment, the method includes the detection of a pointer update of a first object having a global scope. In one embodiment, the pointer update updates a link of the first object to point to a second object. In one embodiment, a single instruction is issued to assert that a scope attribute associated with the second object identifies a scope of the second object as global. The single instruction may return failure if the scope attribute that is associated with the second object identifies the scope of the second object as local. In one embodiment, failure of the single instruction may cause the single instruction to invoke a handler routine to verify that the scope of the second object is local. Verification may include the reading of an object descriptor for the second object to determine whether a scope attribute of the object descriptor indicates that the scope of the second object is local. If verified, the second object, and each object reachable from the second object, are converted into global objects.

In the following description, numerous specific details such as logic implementations, sizes and names of signals and buses, types and interrelationships of system components, and logic partitioning/integration choices are set forth in order to provide a more thorough understanding. It will be appreciated, however, by one skilled in the art that the invention may be practiced without such specific details. In other instances, control structures and gate level circuits have not been shown in detail to avoid obscuring the invention. Those of ordinary skill in the art, with the included descriptions, will be able to implement appropriate logic circuits without undue experimentation.

In the following description, certain terminology is used to describe features. For example, the term "logic" is representative of hardware and/or software configured to perform one or more functions. For instance, examples of "hardware" include, but are not limited or restricted to, an integrated circuit, a finite state machine or even combinatorial logic. The integrated circuit may take the form of a processor such as a microprocessor, application specific integrated circuit, a digital signal processor, a micro-controller, or the like.

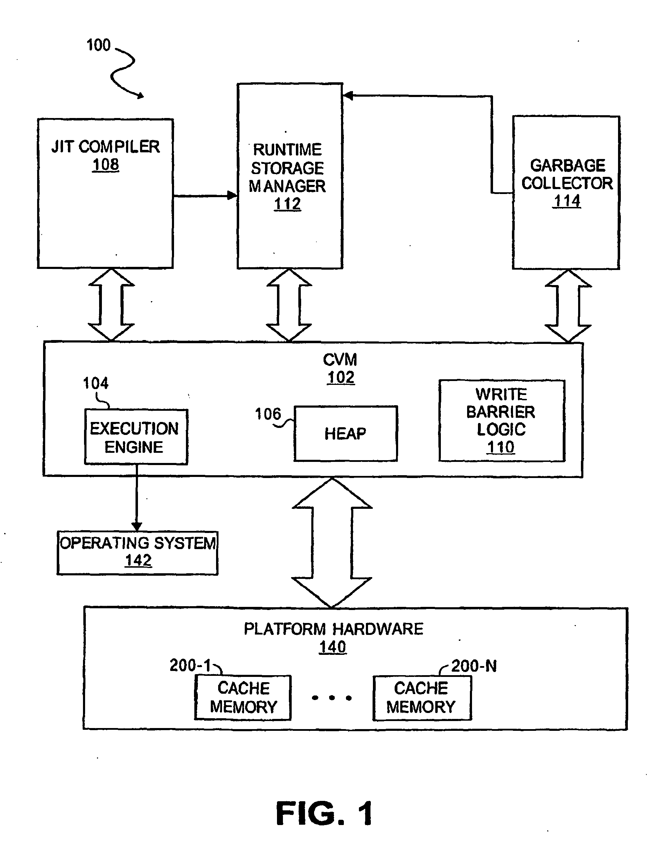

FIG. 1 is a block diagram illustrating a managed run-time environment (MRTE) 100, including write barrier logic 110, for performing hardware-based dynamic escape detection, in accordance with one embodiment. Representatively, MRTE 100 includes a core virtual machine (CVM) 102 capable of interpreting bytecodes into instructions understood by host platform 140 on which MRTE 100 is running. In one embodiment, CVM 102 is a Java virtual machine (JVM). In an alternative embodiment, CVM 102 is a common language infrastructure (CLI) for C-Sharp (C#) programs.

As known to those skilled in the art, a virtual machine (VM) logically partitions a physical machine, such that the underlying hardware of the machine appears as one or more independently operating VMs. Although not shown, CVM 102 may include a virtual machine monitor (VMM) that creates CVM 102 and runs on platform hardware 140 to facilitate for other software the extraction of one or more VMs. Accordingly, CVM 102 may function as a self-contained platform, running its own operating system (OS) and application software. As shown in FIG. 1, CVM 102 provides the abstraction of host platform hardware 140. In one embodiment, host platform 140 may include a multi-core processor to support the running of multiple application threads.

In one embodiment, MRTE 100 provides automatic memory management, type management, threads and synchronization and dynamic loading facilities. The automatic memory management provided by MRTE 100 typically includes management of heap 106. As described herein, a heap is an area of memory reserved for dynamic memory allocation needs of an application. As a result, the heap is reserved for data that is created at runtime, usually because the size, quantity or lag-time of an object to be allocated cannot be determined at compile time. For devices with a small memory footprint, such as mobile devices, including cellular telephones and personal digital assistants, management of this relatively limited memory, to maximize available storage capacity, is a substantial limitation.

Referring again to FIG. 1, CVM 102 may include an execution engine 112. In one embodiment, the execution engine 112 may directly interpret bytecodes into instructions that are understood by the processor of host platform 140. Programs written in high level programming languages, such as Java and C#, typically are first compiled into code in a platform-neutral distribution format, referred to herein as "bytecodes." The compiled bytecodes typically are not directly run on a platform.

Accordingly, while an MRTE may directly interpret bytecodes, this is not typically done unless memory is exceedingly limited. As shown in FIG. 1, in one embodiment, MRTE 100 includes a just-in-time (JIT) compiler 108. Accordingly, instead of using the relatively slower interpretation of bytecodes provided by execution engine 104, MRTE 100 may execute native code generated by JIT compiler 108.

As further illustrated in FIG. 1, MRTE 100 may include a run-time storage manager (RSM) 112 and a garbage collector (GC) 114, in accordance with one embodiment. In one embodiment, GC 114 in combination with RSM 112 perform management of heap 106 and garbage collection to reclaim unused memory. In one embodiment, GC 114 may allocate space for object management, as well as allocating the heap for garbage collection (GC). Typically, when the heap is exhausted, GC 114 proceeds by stopping all managed threads at a safe GC 114 point to reclaim memory from unused objects. Accordingly, in one embodiment, GC 114, in combination with RSM 112, periodically scans dynamically allocated memory for unreachable objects and returns the memory occupied by these objects. In one embodiment, RSM functionality may be incorporated into GC 114.

As described herein, allocated objects can be classified as either (1) local, such that, such objects are visible to a single thread, or (2) global, such that, the object is visible to more than one thread. In multi-threaded MRTE environments, for example, as shown in FIG. 1, many optimizations can be applied when working on objects that are known to be local to a single thread. Since a local object is only reachable by a single thread, a local object is only referenced by local pointers or linked to by other local objects of the same thread. Hence, many synchronization operations can be avoided and local objects can be allocated to enable local reclaiming, thus minimizing the workload of global GC 114.

A large percentage of objects are, indeed, local, but it is a challenge to determine, for a given object, if it is local or not. A first approach for determining whether an object is local is provided by performing compiler static analysis of a program to determine, from when an object is created until it is destroyed that there is no possible way for the object to become reachable from another thread. Unfortunately, static analysis identifies a small fraction of objects that are provably local.

A second approach for is to dynamically keep track of what objects are local or global and detect when an object becomes global by detecting that a link to the object now renders the object globally reachable. This approach has been referred to, in academic publications, as "dynamic escape detection." An approach to dynamic escape detection is to check, every time any pointer is updated, if the new link changes the target object from locally reachable to globally reachable. Accordingly, if a pointer update changes an object from locally reachable to globally reachable, "dynamic escape" is detected. As described herein, the checking of all pointer updates to detect dynamic escape is referred to herein as "write barrier."

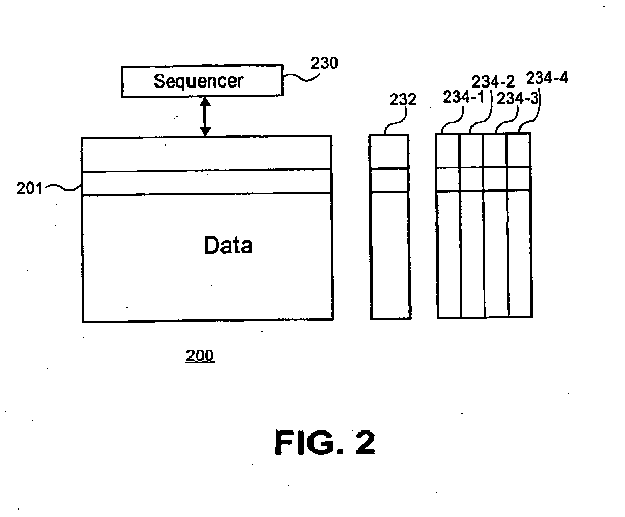

Referring again to FIG. 1, in one embodiment, CVM 102 may provide each thread executing within MRTE 100 a local cache 200 (200-1, ..., 200-N), as further illustrated in FIG. 2. In one embodiment, cache 200, as shown in FIG. 2, enables the association, or mapping, of metadata to the various objects instantiated by a thread. As described herein, attribute aware technology (AAT) associates attribute bits with blocks of memory.

Accordingly, in the embodiments shown in FIG. 2, AAT provides a simplified abstraction of the true cache hierarchy visible to software. In one embodiment, each thread has a private cache (e.g., cache memory 200) with known line size, but unknown capacity and associativity. Additionally, each line is in one of three states: modified (this cache has an exclusive copy of the line on which the local thread can update), shared (this cache has a non-exclusive, read only copy of the line) and invalid (this cache does not have a copy of the line). In one embodiment, each cache line 201 has some number of attribute bits 231, which can be both set and checked by an application.

As shown in FIG. 2, cache 200 may be modified to include one or more attribute bits 234 (234-1, 234-2, 234-3, 234-4), which are defined per cache line block (201) and are local to a specific thread. In one embodiment, sequencer performs data loads and sets attributes 234 as directed by one or more AAT instructions. In one embodiment, a AAT enables thread to set the attributes of a block of memory. In addition, a thread can ask to be notified when a cache line with a specific attribute bit is invalidated or evicted from its local cache. A thread can also perform memory loads that assert a specific attribute bit being set and if the expected attribute bit is not set, a user level handler is run in place of the load.

Accordingly, as described herein, AAT introduces user controlled attribute bits 234 that are associated with cache lines 201. Although illustrated with reference to associating with cache lines, the association of such metadata, or attribute bits, with blocks of memory is not limited to the association of attribute bits with cache lines and may include the incorporation of such attribute bits within system memory and even within the paging of memory to disk, according to the desired implementation.

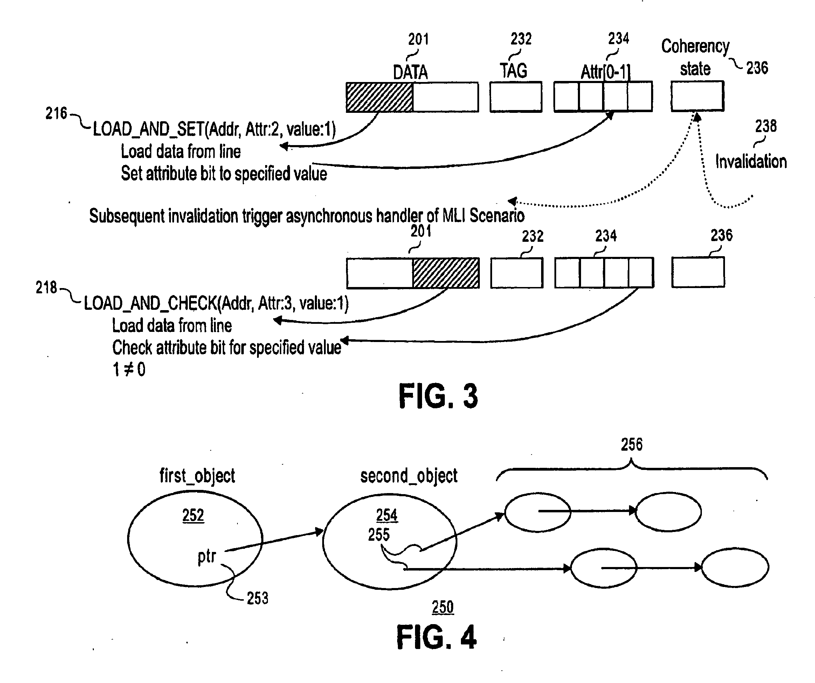

FIG. 3 is a block diagram illustrating, in one embodiment, LOAD_AND_SET instruction 216 and LOAD_AND_CHECK instruction 218, which may be referred to herein as "AAT instructions." In one embodiment, the LOAD_AND_SET instruction 216 performs a normal memory LOAD_AND_SET, a specified attribute bit 234 for the reference line 201 to a specified value (e.g., the second attribute bit to the value of one). Once the read sets an attribute bit in its local cache 200, the thread can ask to be notified asynchronously if the associated line 201 is invalidated from its local cache 200. The LOAD_AND_CHECK instruction 218 performs a normal memory load while asserting that a specified attribute bit of the reference line is currently set to a particular value (e.g., is the first attribute bit of the line currently set to zero?). If a line's attribute does not have the expected value, the LOAD_AND_CHECK instruction 218 is replaced with a specified handler. A CLEAR_ATTRIBUTE_BITS instruction (not shown) that clears an attribute bit of a specified position to a zero value (e.g., clears a third attribute bit for every line in the cache).

Both the asynchronous notification associated with monitored line invalidations and the synchronous handling of a failed bit assertion may be provided by the loading of a user-specified handler. In one embodiment, referred to as the "memory line invalidate" (MLI) scenario, the appropriate handler that needs to be invoked when a line with a specified attribute bit set is invalidated from a thread's cache (either because it is explicitly invalidated by another thread or because those lines simply were evicted from the cache) will require an appropriate user-selected handler routine. A second scenario is referred to as the "unexpected memory state (UMS) scenario." The UMS scenario identifies the appropriate handler that needs to be invoked when a LOAD_AND_CHECK instruction 218 finds that an attribute does not meet the instruction's expected value.

In one embodiment, AAT can be further extended to provide a set of one of AAT range descriptors. These user-programmable range descriptors define a range of the virtual memory space defined by base and bound or equivalent method, wherein the line's actual attributes are overwritten for LOAD_AND_CHECK instructions 218. Accordingly, in one embodiment, when a target address of a LOAD_AND_CHECK instruction 218 falls within a predefined AAT range, instead of comparing the expected attribute value against the actual AAT attributes for the reference line, the expected attribute value is compared against the override attribute provided for the range. In one embodiment, AAT range descriptors have no effect with respect to the detecting and reporting lines that are invalidated or evicted.

FIG. 4 is a block diagram illustrating a basic pointer update operation 250. Representatively, a pointer 253 of a first object 252 is updated to point to a second object 254. In one embodiment, write barrier logic (FIG. 1) is described to analyze a pointer update to determine whether a target object 254 of a pointer update has caused dynamic escape of the target object, such that a scope of the target object has gone from local to global. A basic pointer update operation is shown in Table 1.

**TABLE 1**

| BASIC OPERATION |
|---|
| first_object→ptr = second_object |

In one embodiment, whenever a global object (first object) 252 has one of its pointers 253 updated, write barrier logic 110 (FIG. 1) checks if the object 254 that the global object is about to point to (second (target) object) 254 is currently a local object. When the second object 254 is identified as a local object, the second object 254 needs to be converted from a local object to a global object before the pointer update operation can be executed. In addition, each object 256 reachable from the second object is converted to a global object. Table 2 illustrates the pseudo code for performing such operations.

**TABLE 2**

| |
|---|
| ```
        if (if_globally_reachable (first_object) = = true
                if (if_globally_reachable (second_object) = = false)
                       convert_to_globally reachable (second_object)
                       // will be recursive for all objects reachable from object
        first_object→ptr = second_object
``` |

Unfortunately, the performance impact of replacing each pointer update (see the basic operation shown in Table 1) with the write barrier functionality (see Table 2) a significant performance impact is caused by the addition of such write barrier functionality. In one embodiment, the first check indicated in the pseudo code of Table 2 may be avoided, such that, based on the context of the basic update operation, it can be determined whether the first object is global. Accordingly, such portion of the write barrier functionality may be removed. However, even with the removal of such functionality, the cost of including the write barrier functionality to each basic pointer update operation is significant.

As indicated by the pseudo code of Table 2, the second check is to determine whether the second object is globally reachable. In one embodiment, this check involves reading an object descriptor to determine whether a scope attribute of the object descriptor identifies a scope of the second object as local. In one embodiment, such functionality can be performed using machine code, including a read instruction followed by a compare instruction, followed by a conditional branch instruction. Although such machine code seems rather simple, pointers are updated very frequently, such that even a modest addition in the work performed by each basic pointer update operation would have a net effect of providing a significant slowdown of application execution.

Accordingly, in one embodiment, as shown in FIGS. 2 and 3, an attribute 234 is associated with each memory object to identify a reachability of the object as either local or global. Accordingly, in one embodiment, a mapping is performed from objects to memory blocks (cache lines) for which AAT attributes are kept. In one embodiment, an object may be associated with the cache line in which the object begins. If an object is longer than a cache line, in one embodiment, attributes of the first cache line in which the object begins maybe considered the attributes of the object.

In one embodiment, an object may be forced to live on a single cache line by making all objects at least cache line size of the line (approximately 64 bytes). Alternatively, in one embodiment, multiple small objects may start on the same cache line. In one embodiment, the capability of allowing multiple small objects to start on a single cache line is provided. In one embodiment, if any object starting on a cache line is local, the reachability attribute 234 of the respective cache line 201 is marked as local.

In one embodiment, it may be assumed that for every local object, the cache line in which the object begins has a reachability attribute 234 set to indicate a local scope. In addition, it is also assumed that based on the context of where a pointer update occurs, it can be determined that the object being updated (first object) is local or global. Based on such assumption, the write barrier functionality in the pseudo code shown in Table 2 is performed only if the first object is global.

In one embodiment, the pseudo code shown in Table 3 is replaced by LOAD_AND_CHECK instruction 218 to assert that the second object, or target object, is not a local object. In response to such assertion, if the LOAD_AND_CHECK instruction fails, in one embodiment, a user-selected handler may be invoked to perform a complete check of the second object to determine whether the second object is, in fact, a local object; and if so, perform conversion of the local object and all objects reachable from the second object to set a scope of such objects to local. Accordingly, in one embodiment, AAT instructions (216 and 218) may be used to implement a single load instruction to provide a filter to remove additional checks necessary to implement write barrier semantics for dynamic escape detection.

In embodiments where a reachability attribute is associated with various cache lines of local cache memory to their respective threads, the eviction of cache lines containing local objects is performed as follows. In one embodiment, if all local objects are created in a specific address range, a AAT range feature may be provided with an override attribute bit settings for the range. In accordance with such an embodiment, eviction of cache lines containing local objects is a non-issue. In an alternative embodiment, an MLI scenario may be provided to detect when a line starting a local object is evicted.

In one embodiment, it is assumed that a value of one is used as the appropriate attribute position to represent local scope. To implement such an embodiment, a list of all local objects is maintained. In accordance with such an embodiment, when one local object escapes the cache, all local objects can be pulled back into the cache. In one embodiment, one or more of the local objects may be promoted to global objects to reduce the number of lines being monitored.

In an alternate embodiment, a zero value is used as the appropriate attribute position to represent local. In this case, all objects that come into the cache are, by default, marked as local. Accordingly, in one embodiment, if the LOAD_AND_CHECK instruction fails, resulting in a full check of the object descriptor, the line attribute could be updated to indicate that a scope of the object is, in fact, global. Accordingly, subsequent accesses to the target global object would then be successfully filtered by the AAT attribute bit. Implementation of these various embodiments may be performed depending on the performance trade-offs and are left as implementation details.

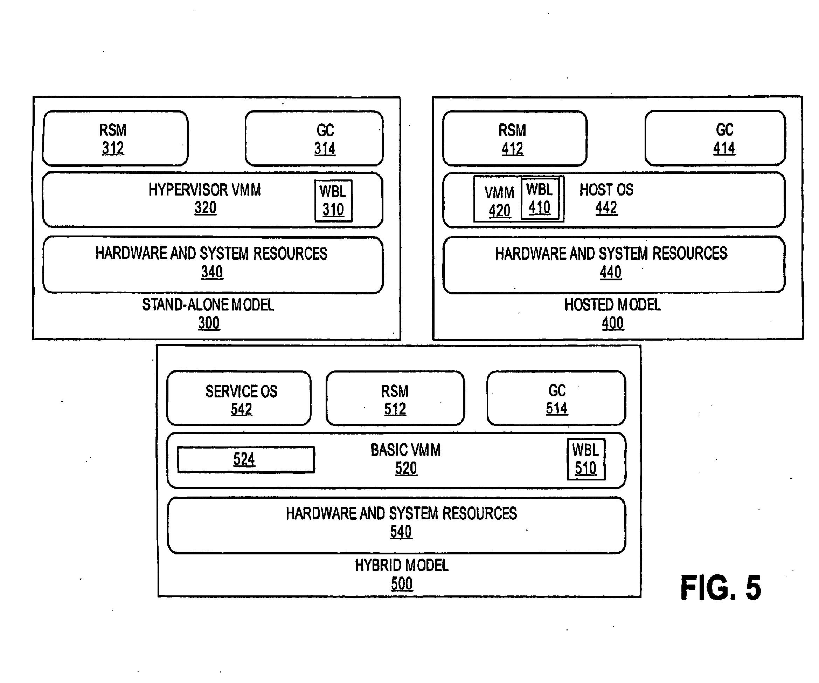

FIG. 5 is a block diagram illustrating various configurations for MRTE host platform hardware 300/400/500, as shown in FIG. 1. As illustrated in FIG. 1, MRTE is shown according to a standalone virtual machine (VM) model, including write barrier logic (WBL) 310 to provide hardware-based dynamic escape detection. In a standalone VM model, the VM monitor (VMM) or hypervisor VMM runs directly on top of hardware resources, such as hardware resources 340/440/540. In one embodiment, VMM 320 loads run-time storage manager (RSM) 312 and global garbage collector (GC) 314. However, the various configurations for MRTE 300/400/500 are not limited to the standalone VM model illustrated in FIG. 1. In one embodiment, the MRTE may be configured according to a host VM configuration 400, as shown in FIG. 5.

Representatively, the host VM model 400 includes VMM 420, which runs on top of host operating system (OS) 442, and WBL 410 to provide hardware-based dynamic escape detection. In one embodiment, VMM 420 loads RSM 412 and GC 414. In a further embodiment, MRTE 100, as shown in FIG. 1, may be configured according to a hybrid VM model 500, as shown in FIG. 5, including WBL 510 to provide hardware-based dynamic escape detection.

Representatively, hybrid VM model 500 is comprised of service OS 542 and micro-hypervisor (basic VMM) 520, including optimized API 524. According to the hybrid VM model 500, micro-hypervisor 520 may be responsible for CPU/memory resource virtualization and domain scheduling. In one embodiment, VMM 520 loads RSM 512 and GC 514. Service OS 542 may be responsible for VM management and device virtualization/simulation. In accordance with the embodiments illustrated in FIG. 5, hardware-based dynamic escape detection may be performed according to any of the MRTE configurations 300/400/500 shown in FIG. 5 or other like configurations.

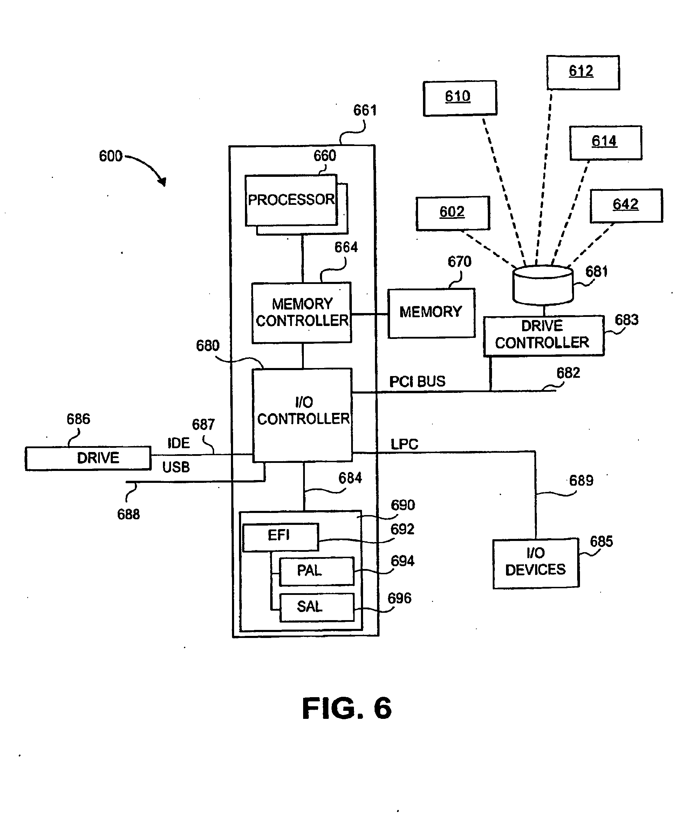

FIG. 6 is a block diagram illustrating a computer system 600 that may incorporate MRTE 100, as shown in FIG. 1, to provide dynamic hardware-based escape detection according to one embodiment. Initially, one VM 602, write barrier logic 610, run-time storage manager 612 and garbage collector 614 and other like components, such as host firmware (692, 694, 696), are stored within the hard disk or disk memory 681, as shown in the computer system 600 of FIG. 6. As shown in FIG. 6, extensible firmware interface (EFI) 692 provides guest VM 602 access to the firmware components. Representatively, the firmware components include system abstraction layer (SAL) 696 and processor abstraction layer (PAL) 694. As described herein, EFI 692, SAL 696 and PAL 694 are collectively referred to herein as "host firmware." In one embodiment, VM 610 interacts with host firmware, specifically PAL 694 and SAL 696 via EFI interface 692, to provide an environment in which applications can be executed by the CPU.

Representatively, computer system 600 may be, for example, a personal computer system. Computer system 600 may include a multicore processor (e.g., processor 660), a memory controller 664, an input/output (I/O) controller 670, and one or more BIOS (basic input/output system) memories (e.g., BIOS memory 670). In one embodiment, processor 660, memory controller 664, I/O controller 680 and BIOS memory 690 may reside on a chipset 661. As described herein, the term "chipset" is used in a manner well known to those of ordinary skill in the art to describe collectively, the various devices coupled to the processor 660 to perform desired system functionality. In an alternative embodiment, processor 660, memory controller 664, I/O controller 680 and BIOS memory 690 may reside on other types of component boards, for example, a daughter board.

The memory controller 664 controls operations between processor 660 and a memory device 670 including, for example, memory modules comprised of random access memory (RAM), dynamic RAM (DRAM), static RAM (SRAM), synchronous DRAM (SDRAM), double data rate (DDR) SDRAM (DDR-SDRAM), Rambus DRAM (RDRAM) or any device capable of supporting high-speed storage of data. The I/O controller 680 may control operations between processor 660 and one or more input/output (I/O) devices 685, for examples, a keyboard and a mouse over a low pin count (LPC) bus 689. The I/O controller 680 may also control operations between processor 660 and peripheral devices, for example, a drive 686 coupled to I/O controller 680 via an integrated drive electronics (IDE) interface 687. Additional buses may also be coupled to I/O controller 680 for controlling other devices, for examples, a peripheral component interconnect (PCI) link 682, or follow on point-to-point link (e.g., PCIx, PCI Express), or a universal serial bus (USB) 688. In one embodiment, the memory controller 664 may be integrated into processor 660 or integrated with I/O controller 680 into a single component.

In the embodiment illustrated, a driver controller 683 may be coupled to PCI link 682 and may control operations of hard disk drive 681. In one embodiment, VM 602, write barrier logic 610, run-time storage manager (RSM) 612 and garbage collector (GC) 614 may be stored on the hard disk drive 681. In this manner, the hard disk drive 681 may serve as the boot-up device including, for example, a loader program to load the various host components as well as the VM 602 to load MRTE components.

BIOS memory 690 may be coupled to I/O controller 680 via bus 684. BIOS memory 690 is a non-volatile programmable memory, for example, a flash memory that retains the contents of data stored within it even after power is no longer supplied. Alternatively, BIOS memory 690 may be other types of programmable memory devices, for examples, a programmable read only memory (PROM) and an erasable programmable read only memory (EPROM). Computer system 600 may also include other BIOS memories in addition to BIOS memory 690.

Accordingly, as shown in FIG. 6, BIOS memory 690 may include host platform firmware for initializing the computer system following system reset. As described herein, the host firmware includes EFI 692, SAL 696 and PAL 694. Accordingly, as described herein the host firmware is loaded during boot-up of computer system 600 to provide a host platform. Following the boot-up, the host platform will load VM 602, which is responsible for loading the core VM 602, write barrier logic 610, run-time storage manager 612, garbage collector 614, service OS 642 and other like components from hard disk 681.

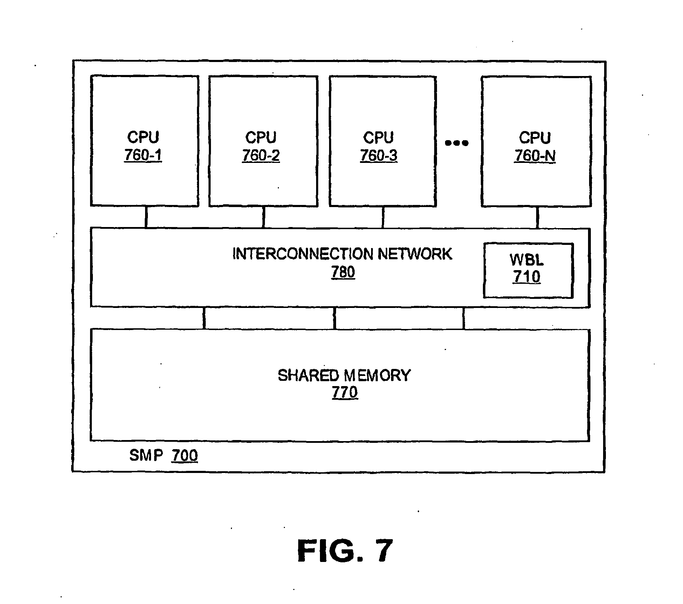

FIG. 7 is a block diagram illustrating a symmetric multi-processing (SMP) system 700, which may operate as host platform of MRTE 100 (FIG. 1) to provide hardware-based escape detection, in accordance with one embodiment. Representatively, SMP 700 may contain a chip multi-processor (CMP) including a plurality of processor cores 760 (760-1,..., 760-N), which are fabricated on the same die. As illustrated, processor cores (CPU) 710 are coupled to interconnection network 780 to access shared memory 770, as well as write barrier logic (WBL) 710 to provide hardware-based dynamic escape detection. In one embodiment, each CPU 710 includes a private core cache hierarchy (not shown) to support AAT instructions, as shown in FIG. 3.

Representatively, CPUs 760 access shared memory 770 via interconnection network 780. In one embodiment, shared memory 770 may include, but is not limited to, a double-sided memory package including memory modules comprised of random access memory (RAM), dynamic RAM (DRAM), static RAM (SRAM), synchronous DRAM (SDRAM), double data rate (DDR) SDRAM (DDR-SDRAM), Rambus DRAM (RDRAM) or any device capable of supporting high-speed storage of data.

Accordingly, in the embodiments described, hardware-based dynamic escape detection within an MRTE, for example, as shown in FIG. 1, may include host platforms hardware, such as computer system 600 (FIG. 6), SMP 700 (FIG. 7) or other like computer architecture. Procedural methods for implementing one or more of the above-described embodiments are now provided.

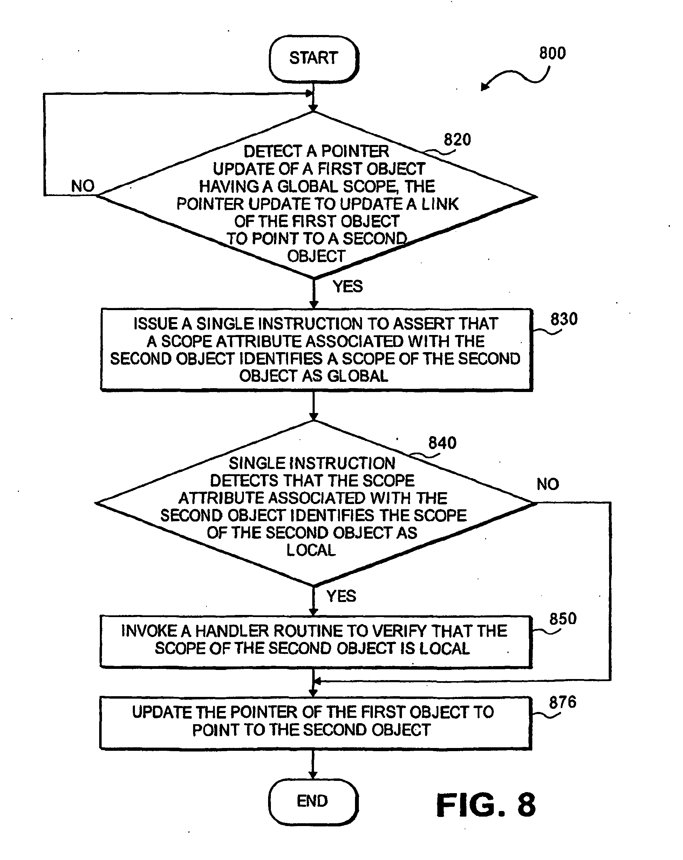

Turning now to FIG. 8, the particular methods associated with various embodiments are described in terms of computer software and hardware with reference to a flowchart. The methods to be performed by a computing device (e.g., MRTE) may constitute state machines or computer programs made up of computer-executable instructions. The computer-executable instructions may be written in a computer program and programming language or embodied in firmware logic. If written in a programming language conforming to a recognized standard, such instructions can be executed in a variety of hardware platforms and for interface to a variety of operating systems.

In addition, embodiments are not described with reference to any particular programming language. It will be appreciated that a variety of programming languages may be used to implement embodiments as described herein. Furthermore, it is common in the art to speak of software, in one form or another (e.g., program, procedure, process, application, etc.), as taking an action or causing a result. Such expressions are merely a shorthand way of saying that execution of the software by a computing device causes the device to perform an action or produce a result.

FIG. 8 is a flowchart illustrating a method 800 for providing hardware-based dynamic escape detection, in accordance with one embodiment. In the embodiments described, examples of the described embodiments will be made with reference to FIGS. 1-7. However, the described embodiments should not be limited to the examples provided to limit the scope provided by the appended claims.

Referring again to FIG. 8, at process block 820, it is determined whether a pointer update of a first object having a global scope is detected. In one embodiment, the pointer update 250 updates a link 253 of the first object 252 having a global scope to point to a second object 254, for example, as shown in FIG. 4. As described with reference to FIG. 4, a pointer update 250 of a first object 252 having a global scope to point to a second object 254 requires the determination of whether the second object 254 has a local scope. When such is the case, the second object is found to have performed a dynamic escape from being a local object to a global object.

Unfortunately, the determination of whether a second object, or target object, has a local scope, can be a very time-consuming process, requiring the querying of an object descriptor of the second object 254 to determine whether a reachability attribute, or scope attribute of the object descriptor, indicates that the second object has a local scope. Accordingly, in one embodiment, a single instruction is provided, such as, for example, AAT instructions (216 and 218), as shown in FIG. 3.

Referring again to FIG. 8, at process block 830, a single instruction is issued to assert that a scope attribute associated with the second object identifies a scope of the second object is global. As shown in FIG. 3, the LOAD_AND_CHECK instruction would assert that a reachability, or scope, attribute associated a start cache line of the second object is global. For example, in one embodiment, assuming that the setting of a scope attribute bit of a cache line to a one ("1") value indicates a local scope, the LOAD_AND_CHECK instruction would return failure if the value contained within the scope attribute of the cache line did not match an expected value, such as a one value. However, in the embodiments described herein, the reachability, or scope, attribute values associated with the cache line may have a zero ("0") value or a one value ("1") or other like value, depending on the particular implementation.

Referring again to FIG. 8, at process block 840, it is determined whether the single instruction detects that the scope attribute associated with the second object identifies the scope of the second object as local. As indicated above, such a determination would cause, for example, the LOAD_AND_CHECK instruction 218, for example as shown in FIG. 3, to fail and to replace the load with the issuance of a handler routine.

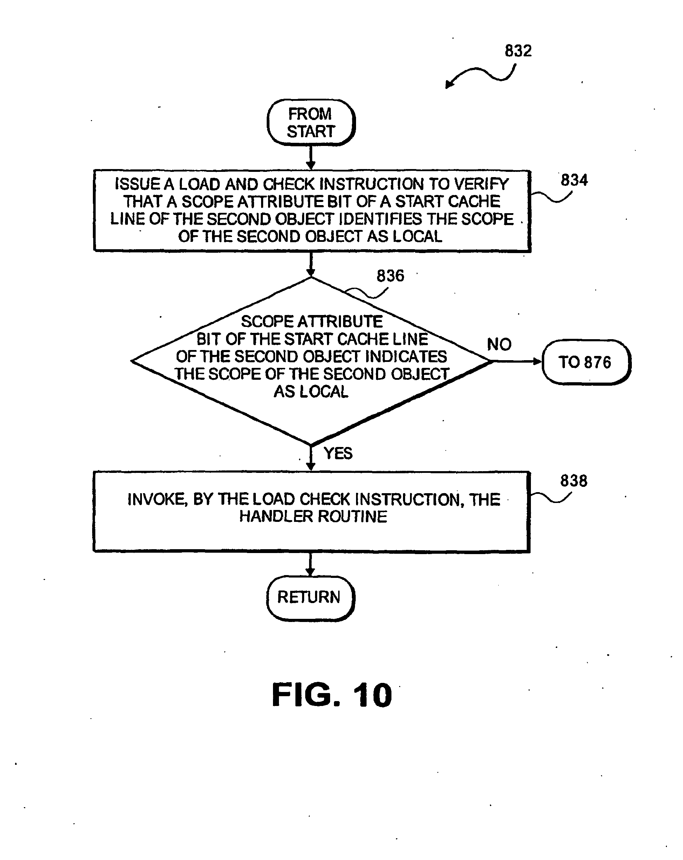

Accordingly, at process block 850, the single instruction invokes a handler routine to verify that a scope of the second object is local. Operations performed by the handler routine are further described with reference to FIGS. 10-12. Finally, at process block 876, once the handler routine is performed, the conversion of the second object to render the second object as a globally reachable object or having a global scope, the pointer update operation is performed such that the pointer of the first object is caused to point to the second object.

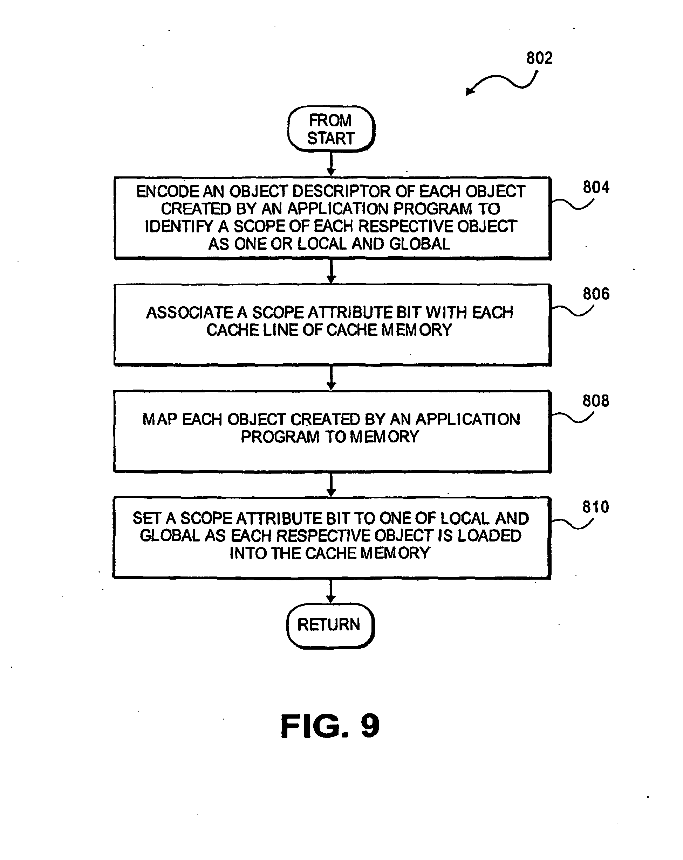

FIG. 9 is a flowchart illustrating a method 802 for initialization to enable hardware-based dynamic escape detection, in accordance with one embodiment. At process block 804, an object descriptor of each object created by an application program is encoded to identify a scope of each respective object as either local or global. At process block 806, a scope attribute bit 234 is associated with each cache line 201 of a cache memory 200, for example, as shown in FIGS. 2 and 3.

Referring again to FIG. 9, at process block 808, each object created by an application program is mapped to a block of memory. At process block 810, a scope attribute bit is set to either a local or global value, as each respective object is loaded into the cache memory. Although described with reference to cache memory, the various mapping of attribute bits or metadata with the various objects created by an application program may be provided within system memory or even within the paging system provided by virtual memory, depending on the desired implementation of the hardware-based escape detection according to the embodiments described above.

FIG. 10 is a flowchart illustrating a method 832 for issuing the single instruction of process block 830 of FIG. 8, in accordance with one embodiment. At process block 834, a LOAD_AND_CHECK instruction 218 is issued to verify that a scope attribute bit 234 of a start cache line 201 of the second object 254 identifies the scope of the second object 254 as local, for example, as shown in FIGS. 3 and 4. At process block 836, it is determined whether the scope attribute bit 234 of the start cache line 201 of the second object 254 indicates that the scope of the second object is local. When such is the case, the LOAD_AND_CHECK instruction 218 fails. In one embodiment, the failure of the LOAD_AND_CHECK instruction 218 causes the LOAD_AND_CHECK instruction 218 to invoke a handler routine. In one embodiment, the handler routine performs additional checks to verify that the second object has a local scope.

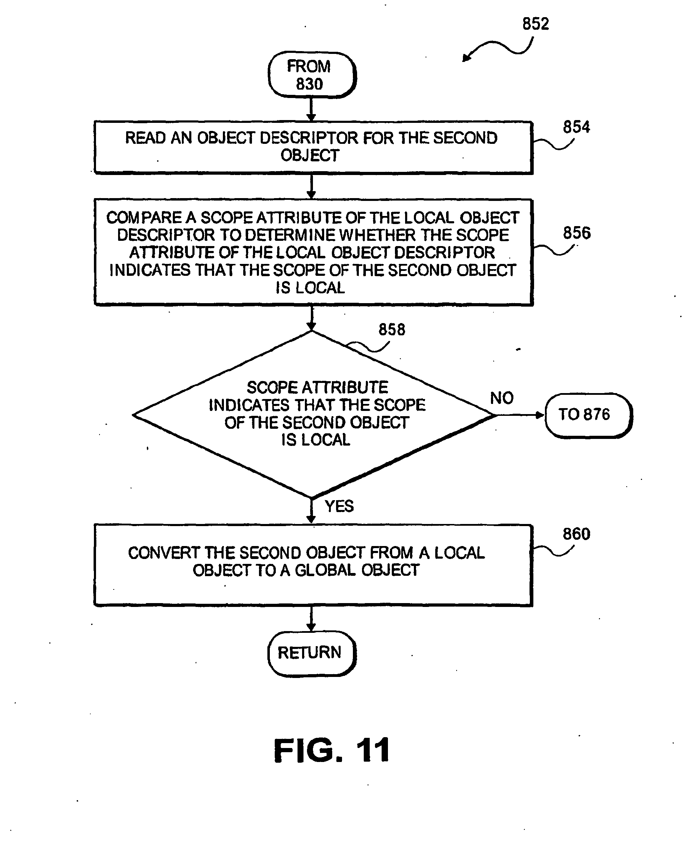

FIG. 11 is a flowchart illustrating a method 852 for invoking a handler routine to verify that a scope of the second object is local, in accordance with one embodiment. At process block 854, an object descriptor for the second object is read. Once read, at process block 856, the scope attribute of the local object descriptor is analyzed to determine whether the scope attribute of the local object descriptor indicates that the scope of the second object is local. At process block 858, it is determined whether the scope attribute of the local object descriptor indicates that the scope of the second object is local.

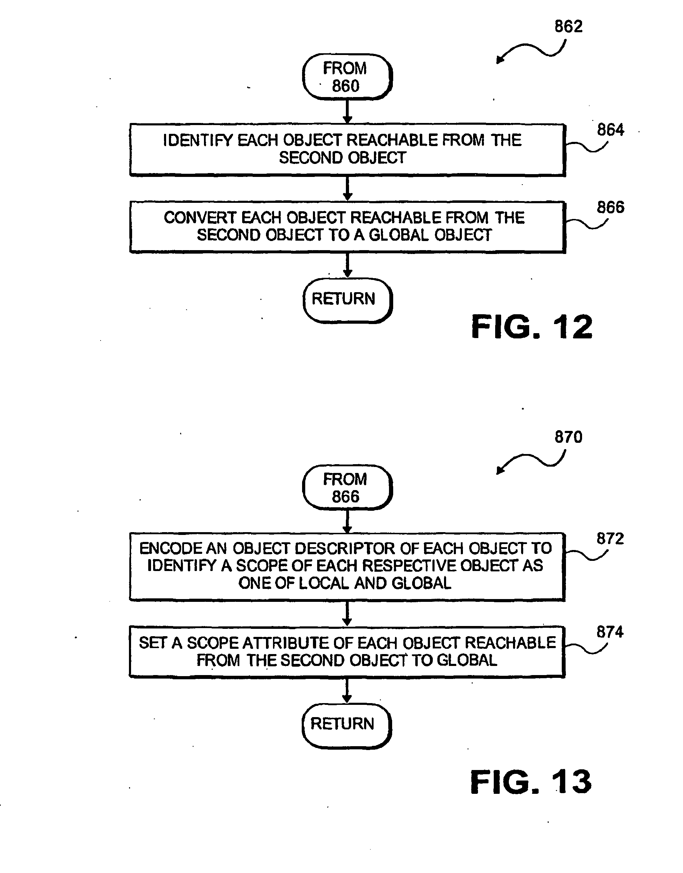

In one embodiment, dynamic escape detection of the second object is detected when the local object descriptor identifies that the second object has a local scope. Accordingly, at process block 860, the second object is converted from a local object to a global object. Conversion of the second object from a local object to a global object is described with reference to FIGS. 12 and 13.

FIG. 12 is a flowchart illustrating a method 862 for converting a local object to a global object, in accordance with one embodiment. At process block 864, each object reachable from the second object is identified. Once identified, at process block 866, each object reachable from the second object is converted to a global object. For example, as shown in FIG. 4, each reachable object 256 of second object 254 according to one or more pointers 255 of second object 254, is converted from a local object to a global object.

FIG. 13 is a flowchart illustrating a method 870 for converting a local object to a global object, in accordance with one embodiment. At process block 872, an object descriptor of each object reachable from the second object is encoded to identify a scope of each respective object as global. In addition, at process block 874, a scope attribute bit of each object reachable from the second object is set to a global value.

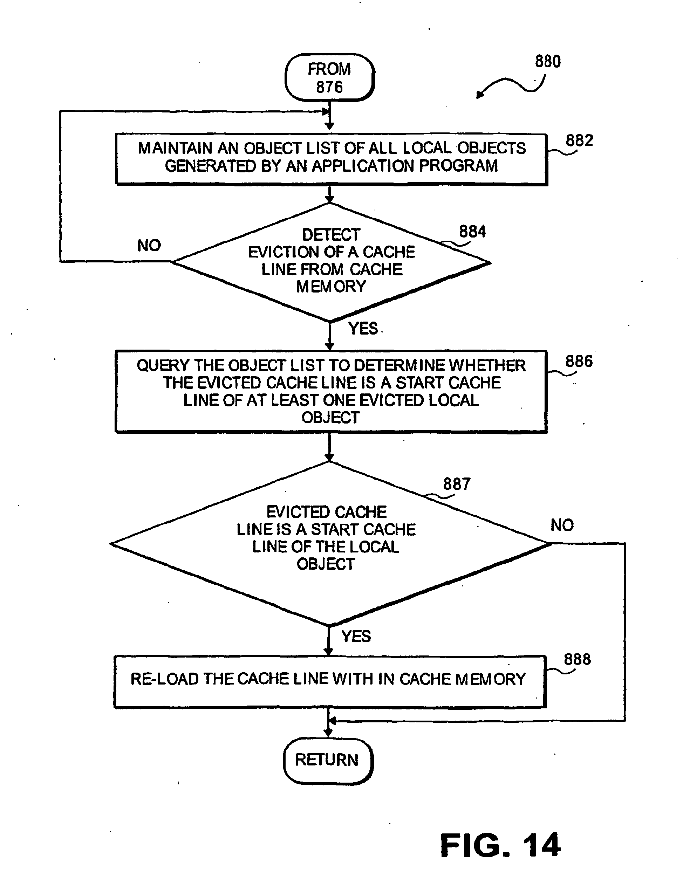

FIG. 14 is a flowchart illustrating a method 880 for enabling hardware-based dynamic escape detection according to one embodiment At process block 882, an object list of all objects generated by an application is maintained. At process block 884, it is determined whether a cache line is evicted from memory. Once detected, at process block 886, the object list is queried to determine whether the evicted cache line is a start cache line of at least one evicted local object. At process block 887, it is determined whether the evicted cache line is the start cache line of the at least one evicted local object. When such is the case, at process block 888, the cache line is reloaded within cache memory.

Accordingly, in the embodiment illustrated with reference to FIG, 14, the attribute bits associated with the program objects are not persistent, but are available as long as such start cache lines of the local objects are within the local cache memory of a respective thread. To maintain start cache lines of the local objects, in one embodiment, the handler routine is notified whenever a cache line is evicted with an attribute indicating that the cache line identifies a program object having a local scope.

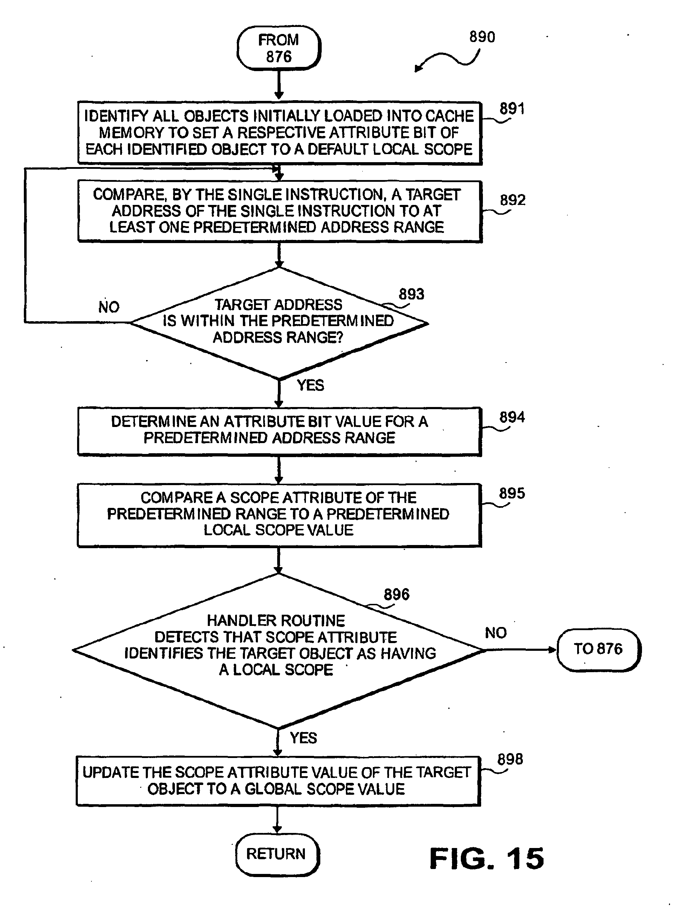

FIG. 15 is a flowchart illustrating a method 890 for initializing cache memory to enable hardware-based dynamic escape detection, according to one embodiment. At process block 891, all objects initially loaded in the cache memory are identified to set a respective attribute bit of each identified object to a default local scope value. At process block 892, the single instruction compares a target address to at least one predetermined address range. At process block 893, it is determined whether the target address is within a predetermined address range. When such is detected, at process block 894, an attribute bit is determined for the predetermined address range. Once determined, at process block 895, the scope attribute bit is compared to a predetermined local scope value. At process block 896, the handler routine may detect that the scope attribute matches the predetermined local scope value. When such is the case, at process block 898, the scope attribute value of the target object is updated to identify the target object as having a global scope.

Accordingly, in contrast to conventional run-time environments, MRTE 100, as shown in FIG. 1 and further described with reference to FIGS. 2-15, implements memory aware technology, or AAT, to implement write barrier logic 110 for performing dynamic escape detection. The use of a single AAT instruction (e.g., LOAD_AND_CHECK instruction 218 of FIG. 3) to perform an initial detection based on a pointer update is provided at a reduced cost. Hence, the AAT instructions, for example as shown in FIG. 3, reduce the cost of implementing dynamic escape detection to provide a practical means for differentiating between locally and globally reachable objects. Accordingly, in one embodiment, garbage collector 116, as shown in FIG. 1, may be optimized to avoid synchronization overhead and minimize object pollution for garbage detection by exploiting knowledge of what objects are locally reachable.

It will be appreciated that, for other embodiments, a different system configuration may be used. For example, while the MRTE 600 (FIG. 6) includes a multicore CPU 660 and MRTE 700 (FIG. 7) includes CMP 650, for other embodiments, a multiprocessor system (where one or more processors may be similar in configuration and operation to the CPU 660/CMP 760 described above) may benefit from hardware-based dynamic escape detection of various embodiments. Further different type of system or different type of computer system such as, for example, a server, a workstation, a desktop computer system, a gaming system, an embedded computer system, a blade server, etc., may be used for other embodiments.

Elements of embodiments may also be provided as an article of manufacturing including a machine-readable medium for storing the machine-executable instructions. The machine-readable medium may include, but is not limited to, flash memory, optical disks, compact disks-read only memory (CD-ROM), digital versatile/video disks (DVD) ROM, random access memory (RAM), erasable programmable read-only memory (EPROM), electrically erasable programmable read-only memory (EEPROM), magnetic or optical cards, propagation media or other type of machine-readable media suitable for storing electronic instructions. For example, embodiments described may be downloaded as a computer program which may be transferred from a remote computer (e.g., a server) to a requesting computer (e.g., a client) by way of data signals embodied in a carrier wave or other propagation medium via a communication link (e.g., a modem or network connection).

It should be appreciated that reference throughout this specification to "one embodiment" or "an embodiment" means that a particular feature, structure or characteristic described in connection with the embodiment is included in at least one embodiment of the present invention. Therefore, it is emphasized and should be appreciated that two or more references to "an embodiment" or "one embodiment" or "an alternative embodiment" in various portions of this specification are not necessarily all referring to the same embodiment. Furthermore, the particular features, structures or characteristics may be combined as suitable in one or more embodiments.

In the above detailed description of various embodiments, reference is made to the accompanying drawings, which form a part hereof, and in which are shown by way of illustration, and not of limitation, specific embodiments in which the invention may be practiced. In the drawings, like numerals describe substantially similar components throughout the several views. The embodiments illustrated are described in sufficient detail to enable those skilled in to the art to practice the teachings disclosed herein. Other embodiments may be utilized and derived therefrom, such that structural and logical substitutions and changes may be made without departing from the scope of this disclosure. The following detailed description, therefore, is not to be taken in a limiting sense, and the scope of various embodiments is defined only by the appended claims, along with the full range of equivalents to which such claims are entitled.

Having disclosed embodiments and the best mode, modifications and variations may be made to the disclosed embodiments while remaining within the scope of the embodiments as defined by the following claims.

## Claims

1. A method for dynamic escape detection **characterized by**:
associating each object created by an application program with a start cache line (201) of the respective object within a cache memory (200), such that a scope attribute bit (234) of each respective object is determined according to a scope attribute bit (234) of a start cache line (201) of each respective object;
detecting a pointer update (250) of a first object (252) having a global scope, the pointer update (250) to update a link (253) of the first object (252) to point to a second object(254);
issuing a single instruction to assert that a scope attribute bit (234) associated with the second object (254) identifies a scope of the second object (254) as global; and
invoking a handler routine to verify that the scope of the second object (254) is local if the single instruction detects that the scope attribute associated with the second object (254) identifies the scope of the second object (254) as local; and
converting, if the second object (254) is identified as local, the second object to a global object.

2. The method of claim 1, wherein associating each object is further **characterized by**:
encoding an object descriptor of each object created by the application program to identify a scope of each respective object as one of local and global.

3. The method of claim 1, wherein associating each object is further **characterized by**:
associating a scope attribute bit (234) with each cache line (201) of cache memory (200);
mapping each object created by an application program to memory; and
setting a scope attribute bit (234) of a respective cached line to one of local and global as each respective object is loaded into a respective cache line (201) of the cache memory (200).

4. The method of claim 1, wherein issuing the instruction is further **characterised by**:
issuing a LOAD_AND_CHECK instruction (218) to verify that a scope attribute bit (234) of a start cache line (201) of the second object (254) identifies the scope of the second object (254) as local; and
invoking, by the LOAD_AND_CHECK instruction (218), the handler routine if the scope attribute bit (234) of the start cache line (201) of the second object indicates the scope of the second object (254) as local.

5. The method of claim 1, wherein invoking the handler routine is further **characterised by**:
reading an object descriptor for the second object (254); and
comparing a scope attribute of the local object descriptor to determine whether the scope attribute of the local object descriptor indicates that the scope of the second object (254) is local; and
wherein converting, if the second object (254) is identified as local, the second object to a global object comprises converting the second object (254) from a local object to a global object if the scope attribute indicated by the object descriptor of the second object (254) indicates that the scope of the second object (254) is local.

6. The method of claim 5, further **characterised by**:
identifying each object (256) reachable from the second object (254); and
converting each object (256) reachable from the second object (254) to a global object.

7. The method of claim 6, wherein converting each object is further **characterised by**:
encoding an object descriptor of each object (256) to identify a scope of each respective object as one of local and global; and
setting a scope attribute bit (234) of each object (256) reachable from the second object (254) to global.

8. The method of claim 1, further **characterised by**:
updating the pointer (253) of the first object (252) to point to the second object (254).

9. An article of manufacture having a machine accessible medium including associated data, wherein the data, when accessed, results in a machine performing a method according to claim 1, further **characterised by**:
encoding an object descriptor of the target object to identify the scope of the target object as global if the scope of the target object is verified as local.

10. The article of manufacture of claim 9, wherein the machine-accessible medium further includes associated data, which when accessed, further results in the machine performing:
maintaining an object list of all local objects generated by an application program;
detecting eviction of a cache line (201) from cache memory (200);
querying the object list to determine whether the evicted cache line (201) is a start cache line (201) of at least one evicted local object; and
re-loading the cache line (201) within cache memory (200) if the evicted cache line (201) is a start cache line (201) of the evicted local object.

11. The article of manufacture of claim 10, wherein the machine-accessible medium further includes associated data, which when accessed, further results in the machine performing:
identifying all objects initially loaded into cache memory (200) to set a respective attribute bit of each identified object to a default local scope; and
updating the scope attribute value of a target object if the handler routine detects that an object descriptor of the target object identifies the target object as having a local scope.

12. The article of manufacture of claim 9, wherein the machine-accessible medium further includes associated data, which when accessed, further results in the machine performing:
comparing, by the single instruction, a target address of the single instruction to at least one predetermined address range;
determining an attribute bit value for a predetermined address range if the target address is within the predetermined address range; and
comparing a scope attribute of the predetermined range to a predetermined local scope value.

13. The article of manufacture of claim 9, wherein the machine-accessible medium further includes associated data, which when accessed, further results in the machine performing:
restricting all local objects to creation within a predetermined address range; and
providing an override attribute bit setting for the range.

14. The article of manufacture of claim 9, wherein the machine-accessible medium further includes associated data, which when accessed, further results in the machine performing:
updating the scope attribute value of the target object if the handler routine detects that an object descriptor of the target object identifies the target object as having a local scope; and
updating the pointer (253) of the global object to point to the target object.

15. A system for dynamic escape detection comprising:
a host platform including a cache memory (200) including at least a scope attribute bit (234) for each cache line (201) within the cache memory (200); and
a managed run-time environment "MRTE" (100, 300, 400, 500), the MRTE (100, 300, 400, 500) including write barrier logic (110, 310, 410, 510, 610) adapted to associate each object created by an application program with a start cache line (201) of the respective object within a cache memory (200), such that a scope attribute bit (234) of each respective object is determined according to a scope attribute bit (234) of a start cache line (201) of each respective object and to issue a single instruction to assert that a scope attribute, associated with a target object of a pointer update from a global object, identifies a scope of the target object as global and to invoke a handler routine to verify that the scope of the target object is local if the scope attribute associated with the target object identifies the scope of the target object as local, and to convert, if the second object (254) is identified as local, the second object to a global object.

16. The system of claim 15, further **characterised by**:
a virtual machine monitor "VMM" (320, 420, 520) to load a virtual machine "VM" and a global garbage collector (114, 314, 414, 514, 614).

17. The system of claim 15, the host platform **characterised by**:
a system memory coupled to an interconnection network; and
a chip multiprocessor coupled to the interconnection network, the chip multiprocessor comprising a plurality of processor cores, wherein each processor core is to support a VMM (320, 420, 520), the VMM (320, 420, 520) to load a run-time storage manager (112, 312, 412, 512, 612) and a global garbage collector (114, 314, 414, 514, 614).

18. The system of claim 15, wherein the write barrier logic (110, 310, 410, 510, 610) is further to associate a scope attribute bit (234) with each cache line (201) of the cache memory (200), to map each object created by an application program to a memory block and to set a scope attribute bit (234) to one of local and global for each respective object loaded into the cache memory (200).

19. A computer program defined by machine-executable instructions that when executed on a machine perform a method for dynamic escape detection according to any one of claims 1 to 8.

## Patentansprüche

1. Verfahren zur dynamischen Escape-Detektion, **gekennzeichnet durch**:
Zuordnen jedes Objekts, das **durch** ein Anwendungsprogramm erzeugt ist, zu einer Cache-Zeile (201) des jeweiligen Objekts innerhalb eines Cache-Speichers (200), so dass ein Geltungsbereichsattribut-Bit (234) jedes jeweiligen Objekts gemäß einem Geltungsbereichsattribut-Bits (234) einer Start-Cache-Zeile (201) jedes jeweiligen Objekts bestimmt ist;
Detektieren einer Zeigeraktualisierung (250) eines ersten Objekts (252), das einen globalen Geltungsbereich aufweist, wobei die Zeigeraktualisierung (250) zum Aktualisieren einer Verbindung (253) des ersten Objekts (252) dient, um auf ein zweites Objekt (254) zu zeigen;
Ausgeben einer einzelnen Anweisung, um festzustellen, dass ein Geltungsbereichsattribut-Bit (234), das dem zweiten Objekt (254) zugeordnet ist, einen Geltungsbereich des zweiten Objekts (254) als global identifiziert; und
Aufrufen einer Handler-Routine, um zu verifizieren, dass der Geltungsbereich des zweiten Objekts (254) lokal ist, falls die einzelne Anweisung detektiert, dass das Geltungsbereichsattribut, das dem zweiten Objekt (254) zugeordnet ist, den Geltungsbereich des zweiten Objekts (254) als lokal identifiziert; und
Umsetzen, falls das zweite Objekt (254) als lokal identifiziert wird, des zweiten Objekts in ein globales Objekt.

2. Verfahren nach Anspruch 1, wobei das Zuordnen jedes Objekts ferner **gekennzeichnet ist durch**:
Codieren eines Objekt-Deskriptors jedes Objekts, das **durch** das Anwendungsprogramm erzeugt wird, um einen Geltungsbereich jedes jeweiligen Objekts als lokal oder global zu identifizieren.

3. Verfahren nach Anspruch 1, wobei das Zuordnen jedes Objekts ferner **gekennzeichnet ist durch**:
Zuordnen eines Geltungsbereichsattribut-Bits (234) zu jeder Cache-Zeile (201) des Cache-Speichers (200);
Abbilden jedes Objekts, das **durch** ein Anwendungsprogramm erzeugt wird, auf den Speicher; und
Einstellen eines Geltungsbereichsattribut-Bits (234) einer jeweiligen gecachten Zeile auf lokal oder global, wenn jedes jeweilige Objekt in eine jeweilige Cache-Zeile (201) des Cache-Speichers (200) geladen ist.

4. Verfahren nach Anspruch 1, wobei das Ausgeben der Anweisung ferner **gekennzeichnet ist durch**:
Ausgeben einer LOAD_AND_CHECK-Anweisung (218), um zu verifizieren, dass ein Geltungsbereichsattribut-Bit (234) einer Start-Cache-Zeile (201) des zweiten Objekts (254) einen Geltungsbereich des zweiten Objekts (254) als lokal identifiziert; und
Aufrufen der Handler-Routine **durch** die LOAD_AND_CHECK-Anweisung (218), falls das Geltungsbereichsattribut-Bit (234) der Start-Cache-Zeile (201) des zweiten Objekts den Geltungsbereich des zweiten Objekts (254) als lokal angibt.

5. Verfahren nach Anspruch 1, wobei das Aufrufen der Handler-Routine ferner **gekennzeichnet ist durch**:
Lesen eines Objekt-Deskriptors für das zweite Objekt (254); und
Vergleichen eines Geltungsbereichsattributs des lokalen Objekt-Deskriptors, um zu bestimmen, ob das Geltungsbereichsattribut des lokalen Objekt-Deskriptors angibt, dass der Geltungsbereich des zweiten Objekts (254) lokal ist;
wobei das Umsetzen, falls das zweite Objekt (254) als lokal identifiziert wird, des zweiten Objekts in ein globales Objekt das Umsetzen des zweiten Objekts (254) von einem lokalen Objekt in ein globales Objekt umfasst, falls das **durch** den Objekt-Deskriptor des zweiten Objekts (254) angegebene Geltungsbereichsattribut angibt, dass der Geltungsbereich des zweiten Objekts (254) lokal ist.

6. Verfahren nach Anspruch 5, das ferner **gekennzeichnet ist durch**:
Identifizieren jedes Objekts (256), das von dem zweiten Objekt (254) erreichbar ist; und
Umsetzen jedes Objekts (256), das von dem zweiten Objekt (254) erreichbar ist, in ein globales Objekt.

7. Verfahren nach Anspruch 6, wobei das Umsetzen jedes Objekts ferner **gekennzeichnet ist durch**:
Codieren eines Objekt-Deskriptors jedes Objekts (256), um einen Geltungsbereich jedes jeweiligen Objekts als lokal oder global zu identifizieren; und
Einstellen eines Geltungsbereichsattribut-Bits (234) jedes Objekts (256), das von dem zweiten Objekt (254) erreichbar ist, auf global.

8. Verfahren nach Anspruch 1, das ferner **gekennzeichnet ist durch**:
Aktualisieren des Zeigers (253) des ersten Objekts (252), um auf das zweite Objekt (254) zu zeigen.

9. Produktionsgegenstand, der ein maschinenzugreifbares Medium aufweist, das zugeordnete Daten enthält, wobei die Daten, wenn auf sie zugegriffen wird, dazu führen, dass eine Maschine ein Verfahren nach Anspruch 1 ausführt, und der ferner **gekennzeichnet ist durch**:
Codieren eines Objekt-Deskriptors des Zielobjekts, um den Geltungsbereich des Zielobjekts als global zu identifizieren, falls der Geltungsbereich des Objekts als lokal verifiziert ist.

10. Produktionsgegenstand nach Anspruch 9, wobei das maschinenzugreifbare Medium ferner zugeordnete Daten enthält, die dann, wenn auf sie zugegriffen wird, ferner dazu führen, dass die Maschine Folgendes ausführt:
Pflegen einer Objektliste aller lokalen Objekte, die durch ein Anwendungsprogramm erzeugt sind;
Detektieren der Räumung einer Cache-Zeile (201) aus dem Cache-Speicher (200);
Abfragen der Objektliste, um zu bestimmen, ob die geräumte Cache-Zeile (201) eine Start-Cache-Zeile (201) wenigstens eines geräumten lokalen Objekts ist; und
erneutes Laden der Cache-Zeile (201) innerhalb des Cache-Speichers (200), falls die geräumte Cache-Zeile (201) eine Start-Cache-Zeile (201) des geräumten lokalen Objekts ist.

11. Produktionsgegenstand nach Anspruch 10, wobei das maschinenzugreifbare Medium ferner zugeordnete Daten enthält, die dann, wenn auf sie zugegriffen wird, ferner dazu führen, dass die Maschine Folgendes ausführt:
Identifizieren aller Objekte, die anfänglich in den Cache-Speicher (200) geladen sind, um ein jeweiliges Attribut-Bit jedes identifizierten Objekts auf einen lokalen Standard-Geltungsbereich einzustellen; und
Aktualisieren des Geltungsbereichsattributwerts eines Zielobjekts, falls die Handler-Routine detektiert, dass ein Objekt-Deskriptor des Zielobjekts das Zielobjekt als eines identifiziert, das einen lokalen Geltungsbereich aufweist.

12. Produktionsgegenstand nach Anspruch 9, wobei das maschinenzugreifbare Medium ferner zugeordnete Daten enthält, die dann, wenn auf sie zugegriffen wird, ferner dazu führen, dass die Maschine Folgendes ausführt:
Vergleichen durch die einzelne Anweisung einer Zieladresse der einzelnen Anweisung mit wenigstens einem vorbestimmten Adressbereich;
Bestimmen eines Attribut-Bitwerts für einen vorbestimmten Adressbereich, falls sich die Zieladresse innerhalb des vorbestimmten Adressbereichs befindet; und
Vergleichen eines Geltungsbereichsattributs des vorbestimmten Bereichs mit einem vorbestimmten lokalen Geltungsbereichswert.

13. Produktionsgegenstand nach Anspruch 9, wobei das maschinenzugreifbare Medium ferner zugeordnete Daten enthält, die dann, wenn auf sie zugegriffen wird, ferner dazu führen, dass die Maschine Folgendes ausführt:
Beschränken aller lokalen Objekte auf Erzeugung innerhalb eines vorbestimmten Adressbereichs; und
Bereitstellen einer Überschreibungsattribut-Bit-Einstellung für den Bereich.

14. Produktionsgegenstand nach Anspruch 9, wobei das maschinenzugreifbare Medium ferner zugeordnete Daten enthält, die dann, wenn auf sie zugegriffen wird, ferner dazu führen, dass die Maschine Folgendes ausführt:
Aktualisieren des Geltungsbereichsattributwerts des Zielobjekts, falls die Handler-Routine detektiert, dass ein Objekt-Deskriptor des Zielobjekts das Zielobjekt als eines identifiziert, das einen lokalen Geltungsbereich aufweist; und
Aktualisieren des Zeigers (253) des globalen Objekts, um auf das Zielobjekt zu zeigen.

15. System zur dynamischen Escape-Detektion, das Folgendes umfasst:
eine Host-Plattform, die einen Cache-Speicher (200) enthält, der wenigstens ein Geltungsbereichsattribut-Bit (234) für jede Cache-Zeile (201) innerhalb des Cache-Speichers (200) enthält; und eine gemanagte Laufzeitumgebung "MRTE" (100, 300, 400, 500), wobei die MRTE (100, 300, 400, 500) eine Schreibsperrenlogik (110, 310, 410, 510, 610) enthält, die ausgelegt ist, jedes Objekt, das durch ein Anwendungsprogramm erzeugt ist, einer Start-Cache-Zeile (201) des jeweiligen Objekts innerhalb eines Cache-Speichers (200) zuzuordnen, so dass ein Geltungsbereichsattribut-Bit (234) jedes jeweiligen Objekts gemäß einem Geltungsbereichsattribut-Bit (234) einer Start-Cache-Zeile (201) jedes jeweiligen Objekts bestimmt ist, und eine einzelne Anweisung auszugeben, um festzustellen, dass ein Geltungsbereichsattribut, das dem Zielobjekts einer Zeigeraktualisierung von einem globalen Objekt zugeordnet ist, einen Geltungsbereich des Zielobjekts als global identifiziert, und eine Handler-Routine aufzurufen, um zu verifizieren, dass der Geltungsbereich des Zielobjekts lokal ist, falls das Geltungsbereichsattribut, das dem Zielobjekt zugeordnet ist, den Geltungsbereich des Zielobjekts als lokal identifiziert, und, falls das zweite Objekt (254) als lokal identifiziert ist, das zweite Objekt in ein globales Objekt umzusetzen.

16. System nach Anspruch 15, das ferner **gekennzeichnet ist durch**:
eine Überwachungseinrichtung einer virtuellen Maschine "VMM" (320, 420, 520), um eine virtuelle Maschine "VM" und einen globalen Abfallsammler (114, 314, 414, 514, 614) zu laden.

17. System nach Anspruch 15, wobei die Host-Plattform **gekennzeichnet ist durch**:
einen Systemspeicher, der mit einem Zusammenschaltungsnetz gekoppelt ist; und
einen Chip-Multiprozessor, der mit dem Zusammenschaltungsnetz gekoppelt ist, wobei der Chip-Multiprozessor mehrere Prozessorkerne umfasst, wobei jeder Prozessorkern dazu dient, eine VMM (320, 420, 520) zu bedienen, und die VMM (320, 420, 520) dazu dient, einen Laufzeitspeichermanager (112, 312, 412, 512, 612) und einen globalen Abfallsammler (114, 314, 414, 514, 614) zu laden.

18. System nach Anspruch 15, wobei die Schreibsperrenlogik (110, 310, 410, 510, 610) ferner dazu dient, das Geltungsbereichsattribut-Bit (234) jeder Cache-Zeile (201) des Cache-Speichers (200) zuzuordnen, jedes Objekt, das durch ein Anwendungsprogramm erzeugt ist, auf einen Speicherblock abzubilden und ein Geltungsbereichsattribut-Bit (234) für jedes jeweilige Objekt, das in den Cache-Speicher (200) geladen ist, auf lokal oder global einzustellen.

19. Computerprogramm, das durch maschinenausführbare Anweisungen definiert ist, die dann, wenn sie auf einer Maschine ausgeführt werden, ein Verfahren zur dynamischen Escape-Detektion nach einem der Ansprüche 1 bis 8 ausführen.

## Revendications

1. Procédé de détection d'échappement dynamique **caractérisé par** :
l'association de chaque objet créé par un programme d'application à une ligne d'antémémoire de début (201) de l'objet respectif dans une antémémoire (200), de telle sorte qu'un bit d'attribut de portée (234) de chaque objet respectif soit déterminé en fonction d'un bit d'attribut de portée (234) d'une ligne d'antémémoire de début (201) de chaque objet respectif ;
la détection d'une actualisation de pointeur (250) d'un premier objet (252) ayant une portée globale, l'actualisation de pointeur (250) servant à actualiser une liaison (253) du premier objet (252) afin de pointer vers un second objet (254) ;
l'émission d'une instruction unique pour établir qu'une liste d'attributs de portée (234) associée au second objet (254) identifie que la portée du second objet (254) est globale ; et
l'appel d'un sous-programme de gestion pour vérifier que la portée du second objet (254) est locale si l'instruction unique détecte que l'attribut de portée associé au second objet (254) identifie que la portée du second objet (254) est locale ; et
la conversion, si le second objet (254) est identifié comme étant local, du second objet en un objet global.

2. Procédé selon la revendication 1, dans lequel l'association de chaque objet est **caractérisée en outre par** :
le codage d'un descripteur d'objet de chaque objet créé par le programme d'application pour identifier que la portée de chaque objet respectif est l'une d'une portée locale ou d'une portée globale.

3. Procédé selon la revendication 1, dans lequel l'association de chaque objet est **caractérisée en outre par** :
l'association d'un bit d'attribut de portée (234) à chaque ligne d'antémémoire (201) de l'antémémoire (200) ;
le mappage de chaque objet créé par un programme d'application dans une mémoire ; et
l'établissement d'un bit d'attribut de portée (234) d'une ligne respective mise en antémémoire sur local ou global au chargement de chaque objet respectif dans une ligne d'antémémoire (201) respective de l'antémémoire (200).

4. Procédé selon la revendication 1, dans lequel l'émission de l'instruction est **caractérisée en outre par** :
l'émission d'une instruction LOAD_AND_CHECK (218) pour vérifier qu'un bit d'attribut de portée (234) d'une ligne d'antémémoire de début (201) du second objet (254) identifie que la portée du second objet (254) est locale ; et
l'appel, par l'instruction LOAD_AND_CHECK (218), du sous-programme de gestion si le bit d'attribut de portée (234) de la ligne d'antémémoire de début (201) du second objet indique que la portée du second objet (254) est locale.

5. Procédé selon la revendication 1, dans lequel l'appel du sous-propramme de gestion est **caractérisé en outre par** :
la lecture d'un descripteur d'objet du second objet (254) ; et
la comparaison d'un attribut de portée du descripteur d'objet local pour déterminer que l'attribut de portée du descripteur d'objet local indique ou non que la portée du second objet (254) est locale ; et
dans lequel, la conversion, si le second objet (254) est identifié comme local, du second objet en un objet global comprend la conversion du second objet (254) d'un objet local en un objet global si l'attribut de portée indiqué par le descripteur d'objet du second objet (254) indique que la portée du second objet (254) est locale.

6. Procédé selon la revendication 5, **caractérisé en outre par** :
l'identification de chaque objet (256) joignable depuis le second objet (254) ; et
la conversion de chaque objet (256) joignable depuis le second objet (254) en un objet global.

7. Procédé selon la revendication 6, dans lequel la conversion de chaque objet est **caractérisée en outre par** :
le codage d'un descripteur d'objet de chaque objet (256) pour identifier une portée de chaque objet respectif comme une portée locale ou une portée globale ; et
l'établissement d'un bit d'attribut de portée (234) de chaque objet (256) joignable depuis le second objet (254) sur global.

8. Procédé selon la revendication 1, **caractérisé en outre par** :
l'actualisation du pointeur (253) du premier objet (252) pour qu'il pointe vers le second objet (254).

9. Article de fabrication ayant un support accessible par machine comportant des données associées, dans lequel les données, quand elles sont sollicitées, amènent une machine à effectuer un procédé selon la revendication 1, **caractérisé en outre par** :
le codage d'un descripteur d'objet de l'objet cible pour identifier que la portée de l'objet cible est globale si la portée de l'objet cible est vérifiée en tant que portée locale.

10. Article de fabrication selon la revendication 9, dans lequel le support accessible par machine comporte en outre des données associées, lesquelles quand elles sont sollicitées, amènent en outre la machine à effectuer :
la tenue à jour d'une liste d'objets de tous les objets locaux générés par un programme d'application ;
la détection de l'expulsion d'une ligne d'antémémoire (201) de la mémoire (200) ;
l'interrogation de la liste d'objets pour déterminer que la ligne d'antémémoire expulsée (201) est une ligne d'antémémoire de début (201) d'au moins un objet local expulsé ; et
le chargement à nouveau de la ligne d'antémémoire (201) dans l'antémémoire (200) si la ligne d'antémémoire expulsée (201) est une ligne d'antémémoire de début (201) de l'objet local expulsé.

11. Article de fabrication selon la revendication 10, dans lequel le support accessible par machine comporte en outre des données associées, lesquelles quand elles sont sollicitées, amènent en outre la machine à effectuer :
l'identification de tous les objets initialement chargés dans l'antémémoire (200) pour établir un bit d'attribut respectif de chaque objet identifié sur une portée locale par défaut ; et
l'actualisation de la valeur d'attribut de portée d'un objet cible si le sous-programme de gestion détecte qu'un descripteur d'objet de l'objet cible identifie que l'objet cible a une portée locale.

12. Article de fabrication selon la revendication 9, dans lequel le support accessible par machine comporte en outre des données associées, lesquelles quand elles sont sollicitées, amènent en outre la machine à effectuer :
la comparaison, par l'instruction unique, d'une adresse cible de l'instruction unique à au moins une plage d'adresses prédéterminée ;
la détermination comme valeur de bit d'attribut d'une plage d'adresses prédéterminée que l'adresse cible se trouve dans la plage d'adresses prédéterminée ; et
la comparaison d'un attribut de portée de la plage prédéterminée à une valeur de portée locale prédéterminée.

13. Article de fabrication selon la revendication 9, dans lequel le support accessible par machine comporte en outre des données associées, lesquelles quand elles sont sollicitées, amènent en outre la machine à effectuer :
la restriction de tous les objets locaux à la création dans une plage d'adresses prédéterminée ; et
la fourniture d'un établissement de bit d'attribut prioritaire pour la plage.

14. Article de fabrication selon la revendication 9, dans lequel le support accessible par machine comporte en outre des données associées, lesquelles quand elles sont sollicitées, amènent en outre la machine à effectuer :
l'actualisation de la valeur d'attribut de portée de l'objet cible si le sous-programme de gestion détecte qu'un descripteur d'objet de l'objet cible identifie l'objet cible comme ayant une portée locale ; et
l'actualisation du pointeur (253) de l'objet global pour qu'il pointe vers l'objet cible.

15. Système de détection d'échappement dynamique comprenant :
une plate-forme hôte comportant une antémémoire (200) comportant au moins un bit d'attribut de portée (234) pour chaque ligne d'antémémoire (201) dans l'antémémoire (200) ; et
un environnement d'exécution géré (MRTE" (100, 300, 400, 500), le MRTE (100, 300, 400, 500) comportant une logique de barrière d'écriture (110, 310, 410, 510, 610) adaptée pour associer chaque objet créé par un programme d'application à une ligne d'antémémoire de début (201) de l'objet respectif dans une antémémoire (200), de telle sorte qu'un bit d'attribut de portée (234) de chaque objet respectif soit déterminé en fonction d'un bit d'attribut de portée (234) d'une ligne d'antémémoire de début (201) de chaque objet respectif et émettre une instruction unique pour établir qu'un attribut de portée, associé à un objet cible d'une actualisation de pointeur depuis un objet global, identifie qu'une portée de l'objet cible est globale et appeler un sous-programme de gestion pour vérifier que la portée du second objet est locale si l'attribut de portée associé à l'objet cible identifie que la portée de l'objet cible est locale, et convertir, si le second objet (254) est identifié comme étant local, le second objet en un objet global.

16. Système selon la revendication 15, **caractérisé en outre par** :
un moniteur de machine virtuel "VMM" (320, 420, 520) pour charger une machine virtuelle "VM" et un ramasse-miettes global (114, 314, 414, 514, 614).

17. Système selon la revendication 15, la plate-forme hôte étant **caractérisée par** :
une mémoire système couplée à un réseau d'interconnexion ; et
un multiprocesseur sur puce couplé au réseau d'interconnexion, le multiprocesseur sur puce comprenant une pluralité de coeurs de processeur, chaque coeur de processeur servant à supporter une VMM (320, 420, 520), la VMM (320, 420, 520) servant à charger un gestionnaire de mémorisation à l'exécution (112, 312, 412, 512, 612) et un ramasse-miettes global (114, 314, 414, 514, 614).

18. Système selon la revendication 15, dans lequel la logique de barrière d'écriture (110, 310, 410, 510, 610) sert en outre à associer un bit d'attribut de portée (234) à chaque ligne d'antémémoire (201) de l'antémémoire (200), pour mapper chaque objet créé par un programme d'application avec un bloc mémoire et établir un bit d'attribut de portée (234) sur local ou global pour chaque objet respectif chargé dans l'antémémoire (200).

19. Programme informatique défini par des instructions exécutables par machine, qui, lorsqu'elles sont exécutées sur une machine, exécutent un procédé de détection d'échappement dynamique selon l'une quelconque des revendications 1 à 8.
